# EUROPÄISCHE PATENTSCHRIFT

(11) **EP 3 592 471 B1**
(45) Veröffentlichungstag und Bekanntmachung des Hinweises auf die Patenterteilung: **31.03.2021**
(21) Anmeldenummer: 18708586.5
(22) Anmeldetag: 22.02.2018
(51) Int. Cl.: B05B 14/462, B05B 14/43, B05B 16/00

(54) **VERFAHREN UND VORRICHTUNG ZUR WIEDERGEWINNUNG VON SPRITZLACKEN AUS SPRITZNEBELN VON SPRITZLACKIERKABINEN**
METHOD AND DEVICE FOR RECOVERING SPRAY PAINT FROM SPRAY MISTS OF SPRAY-PAINTING BOOTHS
PROCÉDÉ ET DISPOSITIF POUR LA RÉCUPÉRATION DE PEINTURE AU PISTOLET À PARTIR DE BRUMES DE PULVÉRISATION DE CABINES DE PULVÉRISATION DE PEINTURE

(30) Priorität: 10.03.2017 DE 102017002312
(43) Veröffentlichungstag der Anmeldung: 15.01.2020
(73) Patentinhaber: Wenker GmbH & Co. Kg, 48683 Ahaus (DE)
(72) Erfinder: LEERS, Franz, 48683 Ahaus (DE)
(74) Vertreter: Münch, Volker
(86) Internationale Anmeldenummer: PCT/EP2018/000069
(87) Internationale Veröffentlichungsnummer: WO 2018/162113

(56) Entgegenhaltungen:
- DE-A1-102015 000 585
- JP-A- S5 631 469

## Beschreibung

### Gebiet der Erfindung

Die vorliegende Erfindung betrifft ein Verfahren zur Wiedergewinnung von Spritzlacken aus Spritznebeln oder Overspray von Spritzlackierkabinen.

Außerdem betrifft die vorliegende Erfindung eine Vorrichtung zur Wiedergewinnung von Spritzlacken aus Spritznebeln oder Overspray von Spritzlackierkabinen.

Nicht zuletzt betrifft die vorliegende Erfindung die Verwendung der wiedergewonnenen Spritzlacke.

### Stand der Technik

Der in der vorliegenden Anmeldung zitierte Stand der Technik wird durch Bezugnahme Bestandteil der Anmeldung.

Spezifisch für die indirekte Lackverarbeitung durch Zerstäuben oder Spritzen sind die Spritznebel. Damit verbunden sind eine Abgabe von Lösemitteln an die Umgebung und der Overspray. Aus Arbeits- und Umweltschutzgründen sind deshalb Maßnahmen zu ergreifen, die nicht unbeträchtlichen Lösemittel- und Lacknebelmengen, die das Lackierobjekt nicht treffen, abzuführen, eventuell zurückzugewinnen oder zu entsorgen. Die entstehenden Spritznebel haben auch in prozesstechnischer Hinsicht unerwünschte Nebeneffekte. Durch vagabundierende Nebel können bereits lackierte Objekte kontaminiert werden, wenn sie sich auf der frischen, noch viskosen Lackierung niederschlagen. Filmfehler in Form von Kratern sind häufig die Folge.

Es ist deshalb notwendig, die Spritznebel und verdunstende Lösemittel unter Kontrolle zu halten. Dazu gibt es in handwerklichen Betrieben Spritzstände, die durch Absaugen und Filtern Lösemittel und Spritznebel mithilfe der Luftführung durch Wasservorhänge hinter dem Spritzstand diese Aufgabe erledigen können. Indes ist dieses Verfahren nicht dazu geeignet, den Spritzlack quantitativ oder nahezu quantitativ wiederzugewinnen.

Bei der industriellen Verarbeitung werden die Spritzeinrichtungen in geschlossene Kabinen gebracht. In diesen werden die verdunstenden Lösemittel und der Sprühnebel durch Zufuhr von Frischluft entfernt. Letzteres sorgt in der Kabine für eine möglichst laminare Strömung von oben nach unten. Für Luftsinkgeschwindigkeiten von 0,2-0,5 m/Sekunde müssen deshalb permanent pro Quadratmeter Kabinenfläche 0,2-0,5 m³/Sekunde oder 720 bis 1800 m³/Stunde konditionierter Luftmengen zugeführt werden. Bei Kabinengrundflächen von 200 m² ist das stündlich bis zu 400.000 m³ gereinigte und konditionierte Frischluft. So können Lackierfehler vermieden und die MAK-Werte der Arbeitsstoffe eingehalten werden.

Zur schnellen und vollständigen Spritznebelaufnahme werden die Spritznebel durch Verengungen in den Absaugvorrichtungen stark beschleunigt, um anschließend mit hoher Relativgeschwindigkeit in eine wässrige Phase aufgenommen zu werden. Das gelingt in den nach dem Venturi-Prinzip arbeitenden Diffusoren besonders gut. Nach der Beschleunigung der Spritznebel beladenen Abluft werden durch die Erweiterung des Öffnungsquerschnitts der Venturi-Düsen starke Wirbel gebildet. Der dabei entstehende Unterdruck zieht die Waschflüssigkeit in den Luftstrom, wodurch die Lacknebel eingefangen werden.

Die in dieser Weise gewonnene Flüssigkeit wird einem Systemtank zugeführt, worin sich Lackschlamm absetzt, der in ein Lackschlammabsetzbecken überführt wird. Eine direkte Wiedergewinnung der ursprünglich verwendeten überschüssigen Spritzlacke ist mithilfe dieser Technologie nicht möglich.

(Vgl. Arthur Goldschmidt, Hans-Joachim Streitberger, BASF-Handbuch Lackiertechnik, Vincentz Verlag, Hannover, 2002, Seiten 583-588, »4.2.1.5 Kabinenkonditionierung und Spritznebelbeseitigung«)

Im Falle der Spritzlackierung von Pulverlacken wird der Overspray durch die Schwerkraft und die vertikal nach unten gerichtete Luftströmung aus den Kabinen geführt. Zur Rückgewinnung dienen Zyklone oder Fliehkraftabscheider, worin der mit Pulverlack beladene Luftstrom durch tangentiale Zufuhr in Rotation versetzt wird. Die Zentrifugalkräfte treiben die Pulverpartikel zur Zyklonwand, wo sie aufgrund der Schwerkraft nach unten fallen, um dadurch in einem Auffangbehälter gesammelt zu werden.

(Vgl. Arthur Goldschmidt, Hans-Joachim Streitberger, BASF-Handbuch Lackiertechnik, Vincentz Verlag, Hannover, 2002, Seiten 605-588, »Rückgewinnung«)

Weitere Verfahren, die die Wiederverwendung von Overspray zum Ziel haben, sind ebenfalls bekannt.

So geht aus der deutschen Patentanmeldung DE 44 21 172 A1 ein Verfahren zur Herstellung eines bei 50 bis 90 °C trocknenden Lacks für eine Steinschlagschutzschicht hervor, bei dem man nicht koaguliertes Overspray aus wasserlöslichen Basislacken enthaltendem Kabinenabwasser durch Wasserentzug auf eine Festkörperkonzentration von etwa 10 bis 35 Gew.-% bringt und mit den für die gewünschten Eigenschaften der Steinschlagschutzschicht erforderlichen Komponenten versetzt. Der durch dieses Verfahren gewonnene Lack ist aber nicht mehr für die ursprüngliche Anwendung als Basislack geeignet.

Aus der internationalen Patentanmeldung WO 92/19686 A1 geht ein Verfahren zur Behandlung und Wiedergewinnung des Oversprays aus der Spritzapplikation von wässrigen Lacken hervor, bei dem alle Feststoffe durch mindestens einen Elektrophoreseschritt abgetrennt und wieder verwendet werden. Um wieder einen mit dem ursprünglich eingesetzten Spritzlack vergleichbaren Spritzlack zu erhalten, müssen die abgetrennten Feststoffe aufgearbeitet werden, was das Verfahren insgesamt aufwändig macht.

Des Weiteren ist aus der japanischen Offenlegungsschrift Jp S59-42065 A eine Spritzkabine, in der Spritznebel aufgefangen und wiedergewonnen werden können, bekannt. Dazu werden die Spritznebel in einem trockenen Separator aufgefangen, wonach die Lackierung angehalten wird. Danach werden ein Kühlmittel und ein Luftstrom über den Separator geführt, wodurch die aufgefangenen Spritznebel verfestigt werden. Die verfestigten Spritznebel fallen wegen des Luftstroms auf die geneigte Fläche einer Vakuumkammer und werden an deren Basis gesammelt. Der Nachteil dieses Verfahrens ist, dass die Lackierung immer wieder unterbrochen werden muss, so dass kein kontinuierliches Verfahren möglich ist.

Außerdem ist aus der deutschen Gebrauchsmusterschrift DE 20 2014 001 981 U1 eine Anlage zum Abscheiden von Lackpartikel aus einem Luftstrom aus einer Beschichtungsanlage bekannt, wobei der Luftstrom über eine Zuführung einer Trenneinrichtung zugeleitet wird, in der die Lackpartikel aus der Luft abgetrennt werden. Dazu werden Eiskristallteilchen in den Luftstrom eingeblasen, so dass die Lackpartikel agglomerieren und abgetrennt werden können. Nachteilig ist, dass die Zusammensetzung des so erzeugten Materials nicht mehr derjenigen des ursprünglichen Lacks entspricht.

Graupel ist eine Form von Niederschlag bei dem Schneekristalle durch angefrorene Wassertröpfchen zu kleinen, bis zu 5 mm großen Kügelchen verklumpt werden. Bei Korngrößen von unter 1 mm Durchmesser spricht man auch von Griesel. Die Partikel sind im Vergleich zu Hagel deutlich kleiner und weisen lediglich einen maximalen Durchmesser bis zu 5 mm auf. Ihre Dichte ist geringer als die von Hagelkörnern und sie haben eine rauere Struktur. Dadurch fallen sie langsamer und können kaum Schaden anrichten. Im Gegensatz zum Hagel fallen Graupel und Griesel hauptsächlich im Winter bei Temperaturen um 0 °C an.

Aus der deutschen Patentanmeldung DE 10 2015 000 585 A1 ist ein Verfahren zum Betreiben einer Oberflächenbehandlungsanlage bekannt, bei dem
a) Overspray, der in einer Beschichtungskabine entsteht, von einem Luftstrom aufgenommen wird;
b) der mit Overspray beladene Luftstrom als Abluftstrom zu einer Abscheideeinheit geführt wird, in der Overspray abgeschieden wird;
c) dem Abluftstrom in einem Zuführbereich stromauf der Abscheideeinheit und/oder in einem Innenraum der Abscheideeinheit ein Filterhilfsmaterial zugeführt wird, das mit dem Overspray ein Abscheidegemisch bildet, das sich in oder an der Abscheideeinheit abscheidet.

Als Filterhilfsmaterial können verflüssigbare Gase, insbesondere Kohlendioxid, Stickstoff, Luft, Sauerstoff, Wasserstoff, Edelgase sowie Kohlenwasserstoffe; Verbindungen die bei Normalbedingungen einen erhöhten Sättigungsdampfdruck haben, insbesondere Alkohol, Treibmittel oder Kältemittel; oder Verbindungen, die bei Temperaturen bis 150° einen hohen Sättigungsdampfdruck haben, insbesondere Wasser oder Glykole, verwendet werden.

### Aufgabe der vorliegenden Erfindung

Der vorliegenden Erfindung lag demnach die Aufgabe zu Grunde eine Vorrichtung und ein Verfahren zur Wiedergewinnung von Spritzlacken aus Spritznebeln von Spritzlackierkabinen zu finden, mit deren Hilfe die Spritzlacke quantitativ oder nahezu quantitativ mit denselben oder nahezu denselben Eigenschaften wie die ursprünglich eingesetzten Spritzlacke wiedergewonnen und für denselben Verwendungszweck wieder angewandt werden können.

### Lösung der vorliegenden Aufgabe

Diese und weitere Aufgaben werden nach dem Vorschlag der Erfindung durch die Vorrichtung und das Verfahren zur Wiedergewinnung von Spritzlacken aus Spritznebeln von Spritzlackierkabinen mit den Merkmalen der unabhängigen Patentansprüche gelöst. Vorteilhafte Ausgestaltungen der Erfindung sind durch die Merkmale der Unteransprüche gegeben.

### Ausführliche Beschreibung der Erfindung

Die vorliegende Erfindung betrifft eine Vorrichtung zur Wiedergewinnung von Spritzlacken aus Spritznebeln von Spritzlackierkabinen.

Spritzlackierkabinen sind üblich und bekannt und können je nach Verwendungszweck unterschiedliche Dimensionen haben. So gibt es Spritzlackierkabinen, die vor allem in Handwerksbetrieben eingesetzt werden, oder industriellen Anlagen, die kontinuierlich oder diskontinuierlich betrieben werden. Ein Haupteinsatzgebiet für solche industriellen Spritzlackierkabinen ist die Automobilserienlackierung (OEM, Original Equipment Manufacturing) sowie die Automobilzuliefererindustrie.

Im Allgemeinen haben die Spritzlackierkabinen eine vertikale Außenwand, eine horizontale Decke und einen horizontalen Boden, die einen geschlossenen, gasdichten und flüssigkeitsdichten Raum bilden. Je nach Größe können sie mehrere Stockwerke hoch und von innen und außen begehbar sein.

Sie weisen mindestens eine, insbesondere eine, für den jeweiligen Verwendungszweck geeignet dimensionierte Spritzlackierkabine mit mindestens einer, insbesondere einer Luftzuleitung auf, über die gereinigte Frischluft in mindestens einen, insbesondere einen Verteilerraum eingeleitet wird. Von da aus strömt die Luft durch eine horizontal angeordnete, luftdurchlässige Filterdecke vorzugsweise als laminare oder nahezu laminare Luftströmung in den Spritzkabinenraum.

In dem Spritzkabinenraum ist mindestens ein mit einem Spritzlack zu lackierendes Objekt, beispielsweise Holzteile, Möbel, weiße Ware, Flugzeugteile oder Kraftfahrzeugkarosserien vorzugsweise an Transportvorrichtungen hängend oder vorzugsweise auf Transportvorrichtungen stehend platziert. Mithilfe der Transportvorrichtungen können beispielsweise Kraftfahrzeugkarosserien aus der Spritzkabine zu weiteren Vorrichtungen in den Lackierstraßen wie Trockenöfen oder Bestrahlungsvorrichtungen weitergeführt werden. Vergleichbares gilt für die hängend fixierten Objekte.

Auf die Oberfläche des mindestens einen zu lackierenden Objekts wird mithilfe mindestens einer Spritzlackiervorrichtung mit mindestens einer Sprühdüse, der Spritzlack appliziert.

Als Spritzlackiervorrichtung werden vorzugsweise manuell geführte Spritzlackierpistolen oder computergesteuerte Spritzlackierroboter verwendet.

Bei dem Spritzlack selbst kann es sich um einen wässrigen oder lösemittelhaltigen, physikalisch trocknenden Lack, oxidativ härtenden Lack, Zweikomponentenlack, Einbrennlack oder strahlenhärtbaren Lack, der insbesondere mit IR-Strahlung, sichtbarem Licht, UV-Strahlung und/oder Elektronenstrahlung gehärtet werden kann, handeln. Die unterschiedlichen Härtungsmechanismen können in ein und demselben Spritzlack angewandt werden. Man spricht dann auch von »Dual-Cure-Lacken«.

Der Spritzlack kann in unterschiedlichen Anwendungsbereichen als Schiffslack, Bautenlack, Möbellack oder Kraftfahrzeuglack angewandt werden. Beispielsweise wird er bei der Kraftfahrzeuglackierung in der Form von Klarlack, Unidecklack, Basislack, Füller, Steinschlagschutzlack, Unterbodenschutzlack und Reparaturlack verwendet.

Spritzlacke dieser Art sind üblich und bekannt und am Markt erhältlich. Beispiele geeigneter Rezepturen finden sich in dem Lehrbuch von Bodo Müller und Ulrich Poth, »Lackformulierungen und Lackrezeptur«, Vincentz Verlag, Hannover, 2003, Seiten 73 bis 222.

Im Allgemeinen verlässt der Spritzlack die Sprühdüsen der Spritzlackiervorrichtungen in der Form eines Lackspritzkegels und trifft auf die Oberfläche des zu lackierenden Objekts auf. Dabei treffen bekanntermaßen erhebliche Mengen an Spritzlack nicht auf der Oberfläche auf, sondern bilden Spritznebel oder Overspray.

Die Spritznebel werden durch den laminaren Luftstrom durch mindestens einen, insbesondere einen, horizontalen, luft- und spritznebeldurchlässigen Siebboden entfernt. Sie gelangen in eine unterhalb des mindestens einen Siebbodens angeordnete mindestens eine, insbesondere eine, Spritznebellenkung und treten durch mindestens einen, insbesondere einen, weiteren horizontalen, für Luft und Spritznebel durchlässigen Siebboden in einen darunter angeordneten mindestens einen, insbesondere einen, Verwirbelungsreaktor ein.

Der mindestens eine Verwirbelungsreaktor kann horizontal, schräg nach unten geneigt oder vertikal unter der mindestens einen Spritzlackierkabine angeordnet sein und hat einen runden Querschnitt.

Der mindestens eine, insbesondere eine, für Luft und Spritznebel durchlässige Siebboden kann in dem runden Umfang des mindestens einen, insbesondere einen, horizontal oder schräg nach unten geneigten Verwirbelungsreaktors im Bereich der Reaktorwand, durch die die unten beschriebene mindestens eine, insbesondere eine, Kältemittelleitung führt, mittig angeordnet sein, so dass für die Luft und die mitgeführten Spritznebel eine möglichst lange Kühlstrecke zur Verfügung steht.

Handelt es sich um mindestens einen, insbesondere einen, vertikalen Verwirbelungsreaktor, ist der mindestens eine, insbesondere eine, für Luft und Spritznebel durchlässige Siebboden vorzugsweise mittig in der horizontalen oberen Reaktorwand angeordnet, so dass die Luft und die mitgeführten Spritznebel der unten beschriebenen mindestens einen, insbesondere einen, Kältemittelzuleitung entgegen strömen.

Die Abmessungen des mindestens einen Verwirbelungsreaktors richten sich im Wesentlichen nach der zugeführten Luftmenge und der Menge der mitgeführten Spritznebel sowie der erforderlichen Kühlkapazität, um die Graupel- und/oder Grieselpartikel zu erzeugen. Der Fachmann kann daher die Abmessungen, ohne erfinderisch tätig zu werden, aufgrund seiner Erfahrung rechnerisch ermitteln.

Die Wandstärke des mindestens einen Verwirbelungsreaktors richtet sich im Wesentlichen nach den Abmessungen, dem Material, aus dem er aufgebaut ist, und den Kräften, die aufgrund des Gewichts, der unten beschriebenen rotierenden Kältemittelzuleitungen mit den Sprüharmen und der Drehgeschwindigkeit auf den mindestens einen Verwirbelungsreaktor einwirken. Dabei ist die Wandstärke so zu wählen, dass im laufenden Betrieb der mindestens eine Verwirbelungsreaktor und die Verbindungen zu den angeschlossenen Aggregaten sich nicht verwinden. Der Fachmann kann daher die Wandstärke, ohne erfinderisch tätig zu werden, aufgrund seiner Erfahrung rechnerisch ermitteln. Vorzugsweise liegt die Wandstärke der Reaktorwand bei 0,5 cm bis 2 cm.

Die Reaktorwand ist aus mindestens einem Material aufgebaut, das korrosionsstabil, kältestabil, stabil gegenüber Versprödung und bei starken thermischen Schwankungen stabil ist. Beispiele geeigneter Materialien sind V2A-Stahl, V4A-Stahl oder glasfaserverstärkte oder kohlefaserverstärkte Kunststoffe.

Vorzugsweise ist die Oberfläche der Reaktorwand hydrophob oder ultrahydrophob. Dies kann durch die Verwendung fluorierter Kunststoffe wie Teflon, Nanostrukturen, die einen Lotuseffekt hervorrufen, oder hierarchische Strukturen, bei denen Nanostrukturen auf Mikrostrukturen angeordnet sind, erzielt werden. Hierdurch wird in vorteilhafter Weise erreicht, dass sich kein Eis und/oder Graupel- und Grieselpartikel auf der Reaktorwand festsetzen.

Vorzugsweise ist der mindestens eine Verwirbelungsreaktor mit einer üblichen und bekannten Isolierungsschicht versehen oder er wird von außen aktiv gekühlt.

Der mindestens eine, insbesondere eine, Verwirbelungsreaktor ist mit mindestens einer, insbesondere einer, längs oder parallel, insbesondere längs, zur Längsachse angeordneten, in einer vorbestimmten Drehrichtung um die Längsachse rotierenden Kältemittelzuleitung ausgerüstet. Vorzugsweise ist die mindestens eine, insbesondere eine rotierende Kältemittelzuleitung zweifach gelagert. Wenn mehr als eine Kältemittelzuleitung verwendet wird, können die einzelnen Kältemittelzuleitungen dieselbe Drehrichtung oder unterschiedliche Drehrichtungen haben.

Vorzugsweise ist die mindestens eine, insbesondere eine, Kältemittelzuleitung aus den gleichen Materialien wie die Reaktorwand aufgebaut. Bevorzugt hat sie einen runden Querschnitt, dessen lichte Weite sich nach der zuzuführenden Menge an Kältemittel richtet, die notwendig ist, um in dem mindestens einen Verwirbelungsreaktor die Bedingungen nachzustellen, unter denen sich in der Natur Graupel- und/oder Grieselpartikel in Wolken bilden.

Vorzugsweise weist das mindestens eine Kältemittel eine Temperatur von -190 °C bis 0 °C, bevorzugt -100 °C bis -4 °C und insbesondere -50 °C bis -10 °C auf. Vorzugsweise ist das Kältemittel bei Raumtemperatur und Atmosphärendruck ein Gas. Besonders bevorzugt werden ökologisch unbedenkliche, nicht toxische, Gase verwendet. Beispiele geeigneter Gase sind Luft, Stickstoff, Kohlendioxid und Helium. Insbesondere wird Luft verwendet. Die Gase können getrocknet sein oder Spuren von Wasser enthalten, die sich als Eis auf den sich bildenden Graupel- und/oder Grieselpartikel niederschlagen.

Die mindestens eine, insbesondere eine, rotierende Kältemittelzuleitung weist mindestens zwei und insbesondere mindestens drei Sprüharme mit jeweils mindestens zwei und insbesondere jeweils mindestens drei Kältemitteldüsen zur Zuleitung und Eindüsung des mindestens einen, insbesondere einen, Kältemittels in den mindestens einen Verwirbelungsreaktor auf.

Die Eindüsung des mindestens einen, insbesondere einen, Kältemittels kann in Drehrichtung und/oder entgegen der Drehrichtung der mindestens einen, insbesondere einen, Kältemittelzuleitung erfolgen. Erfolgt die Eindüsung ausschließlich entgegen der Drehrichtung kann die dadurch resultierende Kraft zur Drehung der mindestens einen Kältemittelzuleitung verwendet werden.

Die Längsachsen der mindestens zwei, vorzugsweise mindestens drei Sprüharme bilden mit der Längsachse der mindestens einen Kältemittelzuleitung vorzugsweise jeweils einen Winkel von 90°.

Die mindestens zwei, vorzugsweise mindestens drei Sprüharme können an mindestens zwei, vorzugsweise mindestens drei Stellen hintereinander mit der mindestens einen Kältemittelzuleitung verbunden sein. Dabei können sie in einer Fluchtlinie und/oder in einem bestimmten Winkel zueinander versetzt gewissermaßen auf Lücke angeordnet sein.

In einer weiteren Ausführungsform können zwei Sprüharme an einem Ort der mindestens einen Kältemittelzuleitung angeordnet sein, so dass sie eine gemeinsame Längsachse haben. Mindestens zwei solcher Konfigurationen können ebenfalls in einer Fluchtlinie und/oder in einem bestimmten Winkel zueinander versetzt gewissermaßen auf Lücke angeordnet sein.

In noch einer weiteren, bevorzugten Ausführungsform können mindestens drei, insbesondere drei Sprüharme an einer Stelle sternförmig mit der mindestens einen Kältemittelzuleitung verbunden sein. Dabei können mindestens zwei dieser Konfigurationen hintereinander auf der mindestens einen Kältemittelzuleitung angeordnet sein, wobei sie auf Lücke und/oder deckungsgleich stehen können.

In speziellen Fällen können auch in Drehrichtung und/oder entgegen der Drehrichtung gebogene Sprüharme und/oder oder schlangenförmige Sprüharme verwendet werden. All diese Formen können gleichzeitig in dem mindestens einen Verwirbelungsreaktor angewandt werden.

Die Gesamtzahl der Sprüharme an der mindestens einen, insbesondere einen, rotierenden Kältemittelzuleitung richtet sich nach den vorstehend beschriebenen Parametern. Vorzugsweise sind 2 bis 20 der beschriebenen Konfigurationen hintereinander angeordnet. Dabei können an der mindestens einen, insbesondere einen, rotierenden Kältemittelzuleitung mindestens zwei unterschiedliche Konfigurationen angeordnet sein.

Vorzugsweise sind die Sprüharme aus denselben Materialien wie die Kältemittelzuleitungen aufgebaut. Ihre Abmessungen, lichte Weite und Wandstärke richten sich hauptsächlich nach der lichten Weite des Verwirbelungsreaktors und der für die Erzeugung der Graupel- und/oder Grieselpartikel notwendigen, zu versprühenden Menge an Kältemittel.

Es ist von Vorteil, wenn an ihren Enden mindestens eine Kältemitteldüse das mindestens eine Kältemittel in Richtung der Reaktorwand sprüht. Es ist aber auch möglich, dass an ihren Enden ein flexibles Kunststoffteil oder Metallteil in der Form eines Längsstreifens oder einer Bürste angebracht ist, der oder die über die Reaktorwand geführt wird, um gegebenenfalls anhaftende Graupel- und/oder Grieselpartikel abzustreifen. Es können aber auch beide Arten von Sprüharmen zugleich in dem mindestens einen Verwirbelungsreaktor verwendet werden.

Die Sprüharme können unterschiedliche Konturen aufweisen. So kann die Kontur kreisrund, oval, elliptisch oder flügelförmig sein.

Vorzugsweise wird die mindestens eine, insbesondere eine, Kältemittelzuleitung durch einen Motor, vorzugsweise einen gegen Explosion gesicherten Elektromotor oder einen Druckluftmotor angetrieben. Dabei wird im Falle des mindestens einen horizontalen oder schräg nach unten geneigten Verwirbelungsreaktors die mindestens eine, insbesondere eine, Kältemittelzuleitung durch mindestens eine vorzugsweise mit einer Gleitringdichtung abgedichtete Durchführung in der vertikalen Reaktorwand in den Innenraum des mindestens einen Verwirbelungsreaktors geführt. An ihrem anderen Ende wird sie durch mindestens eine vorzugsweise mit einer Gleitringdichtung abgedichtete Durchführung durch die gegenüberliegende vertikale Reaktorwand geführt und mit mindestens einem, insbesondere einem, Kältemittelvorrat, der vorzugsweise unter einem Überdruck steht, verbunden.

Die Verbindung ist vorzugsweise eine Vorrichtung, die eine Gleitringdichtung für die mindestens eine rotierende Kältemittelzuleitung und das offene Ende der mindestens einen Kältemittelzuleitung als Kältemitteleinlass sowie das offene Ende der mindestens einen stationären Zuleitung für das mindestens eine Kältemittel, die sich in einer gasdichten, druckfesten und mit der Gleitringdichtung fest verbundenen Ummantelung befinden, umfasst.

Im Falle des mindestens einen vertikalen Verwirbelungsreaktors wird die mindestens eine Kältemittelzuleitung in gleicher Weise angetrieben und durch die horizontale Reaktorwand in den Innenraum des mindestens einen Verwirbelungsreaktors geführt. Das obere offene Ende der mindestens einen Kältemittelzuleitung ist in mindestens einer Vorrichtung der vorstehend beschriebenen Art im Innenraum gelagert, wobei diese mindestens eine Vorrichtung durch Halterungen fest mit der Reaktorwand verbunden ist, so dass sie nicht im Innenraum bewegt werden kann. Das mindestens eine Kältemittel kann dann über mindestens eine stationäre Kältemittelzuleitung durch eine abgedichtete Durchführung in die Vorrichtung und von da aus in das offene Ende der mindestens einen Kältemittelzuleitung geleitet werden.

In dem mindestens einen, insbesondere einen, Verwirbelungsreaktor bilden sich verwirbelte Graupel- und/oder Grieselpartikel mit insgesamt derselben stofflichen Zusammensetzung wie die Spritznebel. Dies ist ein besonderer Vorteil der erfindungsgemäßen Vorrichtung, der dadurch erzielt wird, dass keine zusätzlichen Materialien hinzugefügt werden, die sich ebenfalls verfestigen wie etwa Eis oder Wasser und so die stoffliche Zusammensetzung der Spritznebel und der Graupel- und/oder Grieselpartikel verfälschen.

Bei dem mindestens einen, insbesondere einen, horizontalen oder schräg nach unten geneigten Verwirbelungsreaktor werden die verwirbelten Graupel- und/oder Grieselpartikel in Richtung der vertikalen Reaktorwand, die der vertikalen Reaktorwand auf der Seite der Einleitung der Luft und der mitgeführten Spritznebel gegenüberliegt, transportiert. Dies erfolgt durch die dem mindestens einen Verwirbelungsreaktor zuströmenden Luft und durch das Absaugen der Luft und der Graupel- und/oder Grieselpartikel mithilfe mindestens eines an der Unterseite des mindestens einen Verwirbelungsreaktors angeordneten Auslassrohrs.

Bei dem mindestens einen, insbesondere einen, vertikalen Verwirbelungsreaktor werden die verwirbelten Graupel- und/oder Grieselpartikel zusätzlich unter Einwirkung der Schwerkraft zur dem mindestens einen, an der unteren horizontalen Reaktorwand angeordneten Auslassrohr transportiert.

Durch das mindestens eine Auslassrohr werden die Graupel- und/oder Grieselpartikel und der mindestens eine abgesaugte Gasstrom in mindestens eine, insbesondere eine, Vorrichtung zur Abscheidung der Graupel und/oder Grieselpartikel aus dem mindestens einen abgesaugten Gasstrom geleitet.

An und für sich können alle üblichen und bekannten Vorrichtungen zur Abscheidung von festen Partikeln aus der Gasphase verwendet werden. Erfindungsgemäß ist es indes von Vorteil, wenn man hierfür eine Mehrstufenzentrifuge, insbesondere Zweistufenzentrifuge, und/oder ein Zyklon bzw. einen Zyklonabscheider oder Fliehkraftabscheider verwendet.

Zweistufenzentrifugen sind seit langem bekannt und werden im Einzelnen in der deutschen Offenlegungsschrift DE 199 49 289 A1, der europäischen Patentanmeldung EP 1 092 478 A1, der deutschen Offenlegungsschrift DE 36 22 959 A1, dem Gebrauchsmuster DE 1 947 485 U oder dem Gebrauchsmuster DE 1 823 265 U beschrieben. Üblicherweise arbeiten die Zweistufenzentrifugen kontinuierlich und haben einen sich um eine senkrechte Achse drehenden, nach oben konische erweiternden Korb, der einen oberen Außenrand zum Abschleudern der Partikel aufweist.

Zyklone oder Zyklonabscheider sind ebenfalls seit langem bekannt. Sie dienen der Abscheidung von feinen Partikeln aus Luft/Feststoffgemischen mithilfe von Fliehkraft und Schwerkraft. Multi-, Mehrfach- oder Monozyklone sind heute auf dem Markt gängige Zyklonabscheider. Das zu trennende Gemisch wird einem zylindrischen Behälter mit meist konischem Unterteil tangential oder axial zugeführt. Die Strömung wird dabei entweder durch den tangentialen Eintritt des Gemisches erzeugt oder durch am Umfang des Zyklongehäuses angebrachte Leitschaufeln. Durch die sich im Abscheidungsraum ausbildenden Rotationsströmungen wirken auf die abzutrennenden Partikel Fliehkräfte, die sie nach außen schleudern. Von der Wand des Zyklons sinken die Partikel unter Schwerkraftwirkung nach unten in einen Sammelbehälter.

(Römpp Lexikon Lacke und Druckfarben, Georg Thieme Verlag, Stuttgart, 1998, »Zyklonabscheider«).

Die in dieser Weise abgetrennten Graupel- und/oder Grieselpartikel fallen durch mindestens ein Auslassrohr für die Partikel in mindestens einen, insbesondere einen, darunter angeordneten Auffangbehälter, worin sie aufschmelzen und wieder einen flüssigen Spritzlack bilden, der dieselben oder im Wesentlichen dieselben Eigenschaften wie der ursprüngliche Spritzlack hat und daher demselben Verwendungszweck zugeführt werden kann.

Das Aufschmelzen kann mithilfe von Heizungsvorrichtungen, beispielsweise Induktionsheizungen, die sich im Boden und/oder in und/oder auf den Wandungen des mindestens einen Auffangbehälters befinden, beschleunigt werden. Außerdem können Tauchheizungen zusätzlich oder alleine verwendet werden.

Zur Verbesserung der Homogenität und die Vermeidung der Bildung von Lackschlämmen kann der Inhalt des mindestens einen Auffangbehälters gerührt werden.

Das Gemisch aus zugeführter Luft und gasförmigem Kältemittel wird über mindestens einen Abluftkanal, der im unteren Bereich der Vorrichtung zur Wiedergewinnung von Spritzlack aus Spritznebeln von Spritzlackierkabinen angeordnet ist, entfernt.

Die erfindungsgemäße Vorrichtung zur Wiedergewinnung von Spritzlack aus Spritznebeln von Spritzlackierkabinen ist vorzugsweise in einem Gebäude untergebracht, das aus korrosionsfesten, gegenüber Lösemitteln und Wasser resistenten und gegenüber Kälte und Hitze und raschen Temperaturwechseln stabilen Materialien aufgebaut ist. Beispiele geeigneter Materialien sind gegenüber Säuren und Basen stabile Klinker für die Außenwände, spezielle Kartonagen für die Filterdecke, gegenüber Kälte und Hitze stabile Kunststoffe, die in der Kälte nicht verspröden und in der Hitze unter Belastung nicht kriechen, sowie V2A-Stahl oder V4A-Stahl. Die Teile der erfindungsgemäßen Vorrichtung, in denen die Graupel- und/oder Grieselpartikel erzeugt werden und/oder gehandhabt werden, sind thermisch isoliert und/oder werden aktiv von außen gekühlt.

Die erfindungsgemäße Vorrichtung zur Wiedergewinnung von Spritzlack aus Spritznebeln von Spritzlackierkabinen weist des Weiteren eine übliche und bekannte Mess- und Regelperipherie zur elektronischen, hydraulischen, pneumatischen und/oder mechanischen Steuerung der Materialströme mit den entsprechenden Sensoren auf.

Das erfindungsgemäße Verfahren dient der Wiedergewinnung von Spritzlack aus Spritznebeln von Spritzlackierkabinen. Es ist dadurch gekennzeichnet, dass man
(a) dem Spritzkabinenraum mindestens einer Spritzlackierkabine über mindestens eine Luftzuleitung, mindestens einen Verteilerraum und mindestens eine horizontal angeordnete, luftdurchlässige Filterdecke mindestens eine laminare Luftströmung zuführt;
(b) in den Spritzkabinenraum mindestens ein zu lackierendes Objekt hängend oder stehend platziert und mithilfe mindestens einer manuell geführten Spritzlackierpistole oder mindestens eines computergesteuerten Spritzlackierroboters, die jeweils mindestens eine Sprühdüse aufweisen, mit einem Spritzlack lackiert, so dass das zu lackierende Objekt mit appliziertem Spritzlack bedeckt wird;
(c) die entstehenden, nach unten strömenden Spritznebel über mindestens einen horizontalen, für Luft und Spritznebel durchlässigen Siebboden, mindestens eine darunter angeordnete Spritznebellenkung und mindestens einen horizontalen, für Luft und Spritznebel durchlässigen Siebboden mindestens einem darunter angeordneten Verwirbelungsreaktor mit rundem Querschnitt zuführt;
(d) in dem Verwirbelungsreaktor mindestens eine längs oder parallel zur Längsachse des Verwirbelungsreaktors angeordnete Kältemittelzuleitung in mindestens einer Drehrichtung rotieren lässt und dabei durch mindestens zwei an der Kältemittelzuleitung angeordnete Sprüharme mit jeweils mindestens zwei Kältemitteldüsen mindestens ein Kältemittel zuleitet und eindüst, so dass sich verwirbelte Graupel- und/oder Grieselpartikel mit insgesamt derselben stofflichen Zusammensetzung wie die Spritznebel bilden;
(e) die Graupel- und/oder Grieselpartikel durch mindestens ein an der Unterseite des mindestens einen Verwirbelungsreaktors angeordnetes Auslassrohr zusammen mit mindestens einem Gasstrom absaugt und austrägt;
(f) die ausgetragenen Graupel- und/oder Grieselpartikel in mindestens einer an das mindestens eine Auslassrohr angeschlossenen Vorrichtung aus dem mindestens einen abgesaugten Gasstrom abscheidet;
(g) die aus dem mindestens einen Gasstrom abgeschiedenen Graupel- und/oder Grieselpartikel durch mindestens ein Auslassrohr in mindestens einen darunter angeordneten Auffangbehälter leitet;
(h) die abgeschiedenen Graupel- und/oder Grieselpartikel in dem Auffangbehälter aufschmilzt und so den Spritzlack wiedergewinnt und
(i) den Gasstrom durch mindestens ein Polizeifilter und mindestens einen Abluftkanal absaugt.

Der mindestens eine mit dem wiedergewonnenen Spritzlack gefüllte Auffangbehälter wird ausgetragen und durch mindestens einen neuen, leeren Auffangbehälter ersetzt.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

### Kurze Beschreibung der Figuren

Die Erfindung wird nun anhand von Ausführungsbeispielen näher erläutert, wobei Bezug auf die beigefügten Prinzipskizzen der Figuren 1 bis 10 genommen wird. Es zeigen in vereinfachter, nicht maßstäblicher Darstellung:
- Figur 1: einen vertikalen Längsschnitt durch eine Vorrichtung 1 mit Spritzlackierkabine 2 und Vorrichtung 3 zur Wiedergewinnung von Spritzlack 3.15.1 (vgl. Figur 2) aus den Spritznebeln 3.2;
- Figur 2: einen horizontalen Längsschnitt durch die Ausführungsform der Vorrichtung 1 gemäß der Figur 1 mit Spritzlackierkabine 2 und Vorrichtung 3 zur Wiedergewinnung von Spritzlack 3.15.1 aus den Spritznebeln 3.2;
- Figur 3: einen vertikalen Längsschnitt durch eine weitere Ausführungsform der Vorrichtung 1 mit Spritzlackierkabine 2 und Vorrichtung 3 zur Wiedergewinnung von Spritzlack 3.15.1 aus den Spritznebeln 3.2;
- Figur 4: eine Vorrichtung zur Erzeugung des Kältemittels 3.5.1 und seine Einleitung in die um die Längsachse rotierende Kältemittelzuleitung 3.5;
- Figur 5: eine Draufsicht von oben auf einen Längsschnitt durch eine Ausführungsform eines Sprüharms 3.5.3;
- Figur 6: eine Draufsicht von oben auf einen Längsschnitt durch eine weitere Ausführungsform eines Sprüharms 3.5.3;
- Figur 7: eine Draufsicht von oben auf einen Längsschnitt durch noch eine weitere Ausführungsform eines Sprüharms 3.5.3;
- Figur 8: eine Draufsicht auf einen Querschnitt durch eine Ausführungsform eines Sprüharms 3.5.3 mit einer Kältemitteldüse 3.5.2;
- Figur 9: eine Draufsicht auf einen Querschnitt durch eine weitere Ausführungsform eines Sprüharms 3.5.3 mit einer Kältemitteldüse 3.5.2 und
- Figur 10: eine Draufsicht auf einen Querschnitt durch noch eine weitere Ausführungsform eines Sprüharms 3.5.3 mit einer Kältemitteldüse 3.5.2.

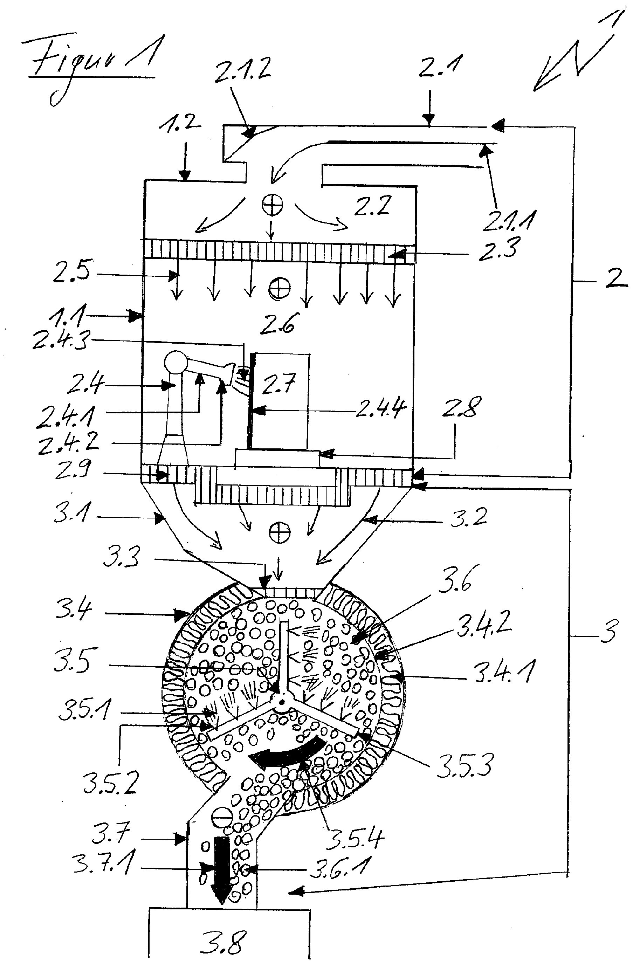

In den Figuren 1 bis 10 haben die Bezugszeichen die folgende Bedeutung:
- 1: Vorrichtung mit Spritzlackierkabine 2 und Vorrichtung zur Wiedergewinnung von Spritzlack 3 aus Spritznebeln 3.2
- 1.1: Außenwand der Spritzlackierkabine 2
- 1.2: Decke der Spritzlackierkabine 2
- 1.3: Boden der Vorrichtung 1

- 2: Spritzlackierkabine
- 2.1: Luftzuleitung
- 2.1.1: Zuluft
- 2.1.2: Umlenkblech
- 2.2: Verteilerraum
- 2.3: luftdurchlässige Filterdecke
- 2.4: Spritzlackiervorrichtung
- 2.4.1: Roboterarm
- 2.4.2: Sprühdüsen
- 2.4.3: Spritzlack
- 2.4.4: applizierter Spritzlack
- 2.5: laminare Luftströmung
- 2.6: Spritzkabinenraum
- 2.7: zu lackierendes Objekt
- 2.8: Transportvorrichtung
- 2.9: für Luft und Spritznebel 3.2 durchlässiger Siebboden

- 3: Vorrichtung zur Wiedergewinnung von Spritznebeln
- 3.1: Spritznebellenkung
- 3.2: Spritznebel
- 3.3: für Luft und Spritznebel 3.2 durchlässiger Siebboden

- 3.4: Verwirbelungsreaktor mit rundem Querschnitt
- 3.4.1: thermische Isolierung
- 3.4.2: Innenwand

- 3.5: um die Längsachse rotierende Kältemittelzuleitung
- 3.5.1: Kältemittel
- 3.5.2: Kältemitteldüsen
- 3.5.2.1: Düsenkanal
- 3.5.3: Sprüharm
- 3.5.3.1: Hohlraum
- 3.5.3.2: Wand
- 3.5.3.3: Luftströmung
- 3.5.4: Drehrichtung
- 3.5.5: Kältemitteleinlass = offenes Ende von 3.5
- 3.5.6: Schaber

- 3.6: verwirbelte Graupel- und/oder Grieselpartikel
- 3.6.1: ausgetragene Graupel- und/oder Grieselpartikel 3.6
- 3.6.2: aus der Gasphase abgeschiedene Graupel- und/oder Grieselpartikel 3.6

- 3.7: Auslassrohr
- 3.7.1: abgesaugter Gasstrom
- 3.8: Vorrichtung zur Abscheidung der Partikel 3.6.1 aus dem abgesaugten Gasstrom 3.7.1
- 3.8.1: Auslassrohr für die aus dem Gasstrom 3.7.1 abgeschiedenen Partikel 3.6.2

- 3.9: Gleitringdichtung für die rotierende Kältemittelzuleitung 3.5
- 3.9.1: Druckanschluss für das Kältemittel 3.5.1
- 3.9.2: Halterung

- 3.10: abgedichtete Durchführung für die rotierende Kältemittelzuleitung 3.5

- 3.11: Kältemittelvorrat
- 3.11.1: stationäre Kältemittelzuleitung
- 3.11.2: Kühlaggregat
- 3.11.3: automatisch geregelter Druckminderer

- 3.12: abgedichtete Durchführung für die rotierende Kältemittelzuleitung 3.5
- 3.13: Elektromotor
- 3.14: Stromquelle

- 3.15: Auffangbehälter
- 3.15.1: wiedergewonnener Spritzlack
- 3.15.2: Heizvorrichtung

- 3.16: Ausfahrvorrichtung
- 3.17: Polizeifilter (Nachfilter)
- 3.18: Abluftkanal

- Pluszeichen im Kreis: Luft- und Materialzufuhr
- Minuszeichen im Kreis: Luft- und Materialabsaugung

### Ausführliche Beschreibung der Figuren

### Figur 1

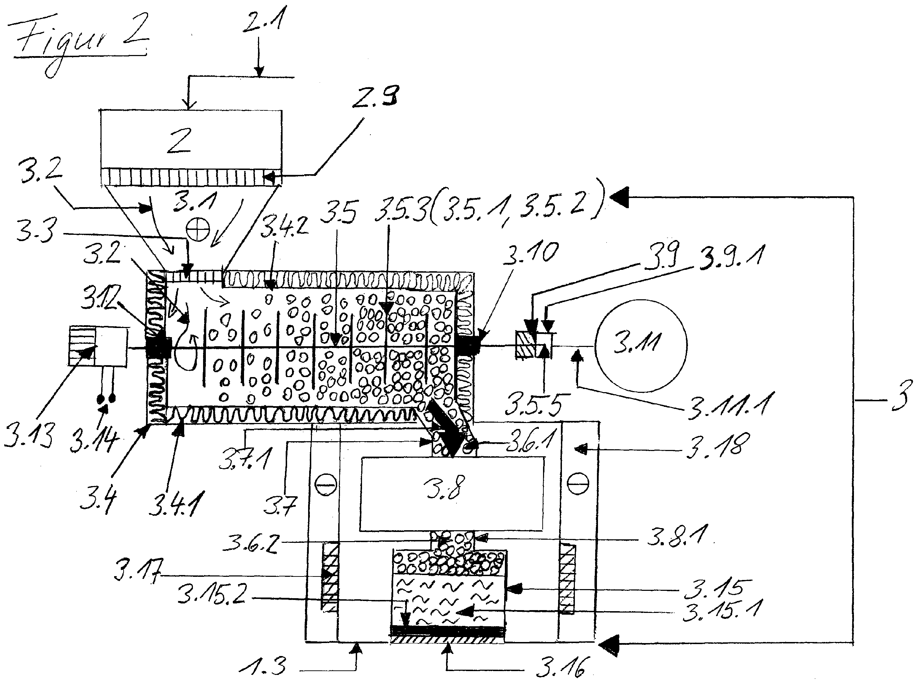

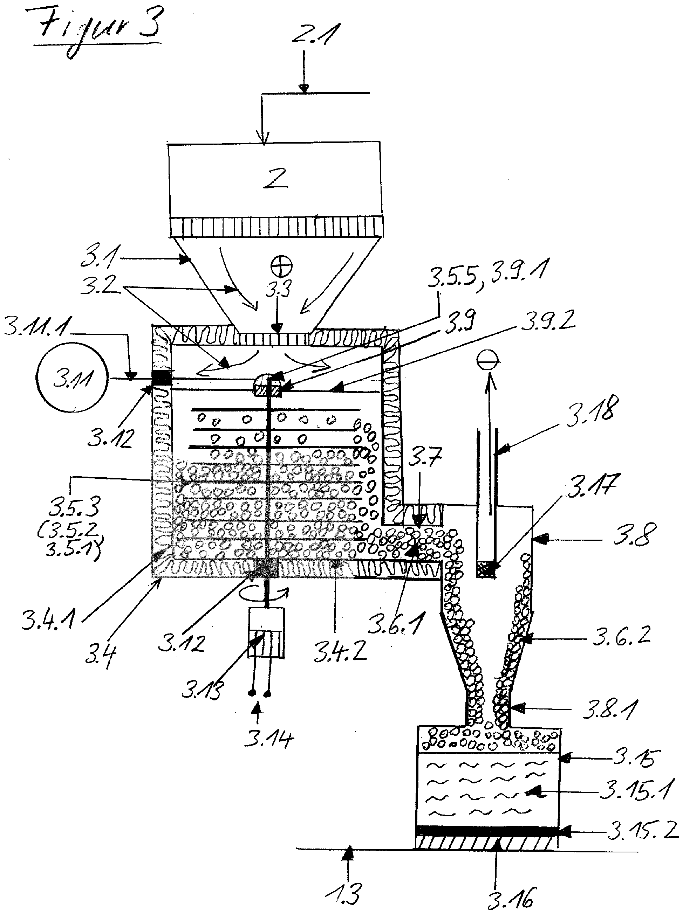

Die Figur 1 zeigt einen vertikalen Längsschnitt durch eine Vorrichtung 1 mit Spritzlackierkabine 2 und Vorrichtung 3 zur Wiedergewinnung von Spritzlack 3.15.1 (vgl. Figuren 2 und 3) aus den Spritznebeln 3.2.

Die Vorrichtung 1 war für die Spritzlackierung von Automobilkarosserien 2.7 ausgelegt und entsprechend dimensioniert. Sie war Bestandteil einer Lackierstraße, wie sie üblicherweise in der Automobilindustrie verwendet wird. Die gasdichten und flüssigkeitsdichten Außenwände 1.1, die gasdichte und flüssigkeitsdichte horizontale Decke 1.2 und der gasdichte und flüssigkeitsdichte Boden 1.3 (vgl. Figuren 2 und 3) waren aus Klinker aufgebaut. Die Außenwände 1.1 wiesen verschließbare Serviceöffnungen und begehbare Türen sowie entsprechend angeordnete begehbare Umgänge mit Geländer auf, über die das Betriebspersonal zu den einzelnen Bauteilen gelangen konnte (nicht wiedergegeben).

Über eine Luftzuleitung 2.1 wurde die an einem Umlenkblech 2.1.2 umgelenkte Zuluft 2.1.1 einem Verteilerraum 2.2 zugeführt und durch eine luftdurchlässige Filterdecke 2.3 als Laminarströmung 2.5 in den Spritzkabinenraum 2.6 eingeleitet. Hierbei deuten die Pfeile ohne Bezugszeichen und die Pluszeichen im Kreis die Strömungsrichtung an.

Im Spritzkabinenraum 2.6 befanden sich mehrere computergesteuerte Spritzlackierroboter 2.4 mit Roboterarmen 2.4.1, Spritzdüsen 2.4.2, die einen Spritzlack 2.4.3 verströmten. Der Spritzlack 2.4.3 traf auf die Automobilkarosserie 2.7 auf und bildete eine Schicht aus appliziertem Spritzlack 2.4.4, wobei erhebliche Mengen an Spritznebeln 3.2 aus Wasser und Lackbestandteilen wie Pigmente, Bindemittel, Vernetzungsmittel, Verdicker, Antioxidantien und Tenside erzeugt wurden.

Die Automobilkarosserie 2.7 war auf einer Transportvorrichtung 2.8 befestigt, mit deren Hilfe die Automobilkarosserie 2.7 nach der Lackierung aus der Spritzlackierkabine 2 bzw. dem Spritzkabinenraum 2.6 herausgefahren und zur nächsten Station der Lackierstraße, beispielsweise einem Ofen zur thermischen Härtung des applizierten Spritzlacks 2.4.4, weiter gefahren wurde.

Die Spritznebel 3.2 wurden durch die Laminarströmung 2.5 über einen für Luft und Spritznebel 3.2 durchlässigen Siebboden 2.9 ausgetragen und gelangten in eine nach unten sich konisch verjüngende Spritznebellenkung 3.1, durch die die Spritznebel 3.2 über einen für Luft und Spritznebel 3.2 durchlässigen Siebboden 3.3, der in die Innenwand 3.4.2 eines Verwirbelungsreaktors 3.4 eingelassen war, in den besagten, horizontal gelagerten Verwirbelungsreaktor 3.4 mit rundem Querschnitt gelenkt. Der Verwirbelungsreaktor 3.4 war mit einer thermischen Isolierung 3.4.1 verkleidet. Die Wände des Verwirbelungsreaktors 3.4 bestanden aus V4A- Stahl.

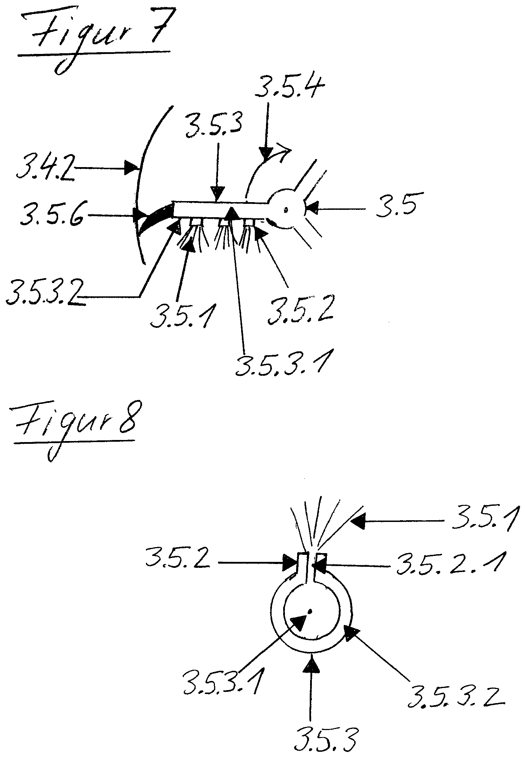

In dem Innenraum des Verwirbelungsreaktors 3.4 rotierte in der Drehrichtung 3.5.4 eine zentral angeordnete Kältemittelzuleitung 3.5, die deckungsgleich hintereinander angeordnete, sternförmige Konfigurationen aus jeweils drei Sprüharmen 3.5.3 aufwies. Jeder Sprüharm 3.5.3 wies drei Kältemitteldüsen 3.5.2 auf, die durch jeweils einen Düsenkanal 3.5.2.1 (vgl. Figuren 8, 9 und 10) -20 °C kalte, getrocknete Luft als Kältemittel 3.5.1 in Drehrichtung 3.5.4 in das verwirbelte Gemisch aus Spritznebeln 3.2 und Luft einsprühten. Dadurch bildeten sich wie in einer Wolke Graupel- und/oder Grieselpartikel 3.6 mit insgesamt derselben Zusammensetzung wie die Spritznebel 3.2. Die Kältemittelzuleitungen 3.5, die Sprüharme 3.5.3 und die Kältemitteldüsen 3.5.2 bestanden ebenfalls aus V4A-Stahl.

Die Graupel- und/oder Grieselpartikel 3.6, 3.6.1 wurden durch ein an der Unterseite des Verwirbelungsreaktors 3.4 angeordnetes Auslassrohr 3.7 zusammen mit dem Gasstrom 3.7.1 abgesaugt und ausgetragen, in eine an das Auslassrohr 3.7 angeschlossene Zweistufenzentrifuge (3.8) gelenkt und darin aus dem mindestens einen abgesaugten Gasstrom 3.7.1 abgeschieden. Zum weiteren Vorgehen wird auf die Figur 2 verwiesen.

### Figur 2

Die Figur 2 zeigt einen horizontalen Längsschnitt durch die Ausführungsform der Vorrichtung 1 gemäß der Figur 1 mit Spritzlackierkabine 2 und Vorrichtung 3 zur Wiedergewinnung von Spritzlack 3.15.1 aus den Spritznebeln 3.2.

In der Figur 2 wird die Spritzlackierkabine 2 mit der Luftleitung 2.1 und dem für Luft und Spritznebel 3.2 durchlässigen Siebboden 2.9 sowie die Spritznebellenkung 3.1 mit den Spritznebeln 3.2 und dem für Luft und Spritznebel 3.2 durchlässigen Siebboden 3.3 nur schematisch vereinfacht dargestellt. Zu weiteren Details wird auf die Figur 1 verwiesen.

Der horizontal gelagerte Verwirbelungsreaktor 3.4 wies die zentral angeordnete, rotierende Kältemittelzuleitung 3.5 mit sieben deckungsgleich hintereinander angeordneten, sternförmigen Konfigurationen aus jeweils drei Sprüharmen 3.5.3, 3.5.1, 3.5.2 auf, die, wie bei der Figur 1 beschrieben, durch Versprühen des Kältemittels 3.5.1 die Graupel- und/oder Grieselpartikel 3.6, 3.6.1 erzeugten. Die Kältemittelzuleitung 3.5 war in den abgedichteten Durchführungen 3.10 und 3.12 drehbar gelagert und wurde durch die einander gegenüberliegenden vertikalen Wände 3.4.2 und die thermische Isolierung 3.4.1 geführt. Sie war an ihrem einen geschlossenen Ende mit einem gegen Explosion gesicherten, regelbaren Elektromotor 3.13 mit Stromquelle 3.14 verbunden. Der Elektromotor 3.13 versetzte die Kältemittelzuleitung 3.5 mit den Sprüharmen 3.5.3 in der gewünschten Drehrichtung 3.5.4 und mit der gewünschten Drehgeschwindigkeit in Rotation. Die rotierende Kältemittelzuleitung 3.5 war an ihrem anderen Ende in einer Gleitringdichtung 3.9 gelagert. Ihr offenes Ende ragte in den Druckanschluss 3.9.1 und diente als Kältemitteleinlass 3.5.5. Der Druckanschluss 3.9.1 war über die stationäre Kältemittelzuleitung 3.11.1 mit dem Kältemittelvorrat 3.11 verbunden.

Die erzeugten Graupel- und/oder Grieselpartikel 3.6.1 wurden über das Auslassrohr 3.7 zusammen mit dem Gasstrom 3.7.1 in die rotierende Zweistufenzentrifuge 3.8 geleitet, wo sie aus der Gasphase abgeschieden wurden. Die abgetrennten Graupel- und/oder Grieselpartikel 3.6.2 fielen über das Auslassrohr 3.8.1 in einen Auffangbehälter 3.15, worin sie mithilfe einer unter dem Boden angeordneten Heizplatte 3.15.2 aufgeschmolzen wurden und wieder einen flüssigen Spritzlack 3.15.1 bildeten. Der Auffangbehälter 3.15 konnte aus der Vorrichtung 1 bzw. aus der Vorrichtung 3 mit einer Ausfahrvorrichtung 3.16 herausgefahren werden und sein Inhalt konnte demselben Verwendungszweck wie der ursprüngliche Spritzlack 2.4.3 zugeführt werden. Dies war ein erheblicher Vorteil gegenüber den Verfahren des Standes der Technik und hatte signifikante Einsparungen an Energie und Kosten zur Folge.

Die Abluft der Vorrichtung 1 wurde über Polizeifilter oder Nachfilter 3.17 in die Abluftkanäle 3.18 geleitet und gegebenenfalls wieder der Zuluft 2.1.1 hinzu gemischt.

### Figur 3

Die Figur 3 zeigt einen vertikalen Längsschnitt durch eine weitere Ausführungsform der Vorrichtung 1 mit Spritzlackierkabine 2 und Vorrichtung 3 zur Wiedergewinnung von Spritzlack 3.15.1 aus den Spritznebeln 3.2.

In der Figur 3 wird die Spritzlackierkabine 2 mit der Luftleitung 2.1 sowie die Spritznebellenkung 3.1 mit den Spritznebeln 3.2 und dem Siebboden 3.3 nur schematisch vereinfacht dargestellt. Zu weiteren Details wird auf die Figur 1 verwiesen.

Bei dieser Ausführungsform war der isolierte Verwirbelungsreaktor 3.4, 3.4.1, 3.4.2 vertikal angeordnet. Der für Luft und Spritznebel 3.2 durchlässige Siebboden 3.3 war in der oberen horizontalen Innenwand 3.4.2 mittig eingelassen. Der Verwirbelungsreaktor 3.4 wies eine vertikale, zentral angeordnete Kältemittelzuleitung 3.5 mit acht horizontal und deckungsgleich hintereinander angeordneten, sternförmigen Konfigurationen aus jeweils drei Sprüharmen 3.5.3, 3.5.1, 3.5.2 auf, die, wie bei der Figur 1 beschrieben, durch Versprühen des Kältemittels 3.5.1 die Graupel- und/oder Grieselpartikel 3.6, 3.6.1 erzeugten. Die Kältemittelzuleitung 3.5 war in der abgedichteten Durchführung 3.12 drehbar gelagert und wurde durch die untere horizontale Innenwand 3.4.2 und die thermische Isolierung 3.4.1 geführt. Sie war an ihrem einen geschlossenen Ende mit einem gegen Explosion gesicherten, regelbaren Elektromotor 3.13 mit Stromquelle 3.14 verbunden. Der Elektromotor 3.13 versetzte die Kältemittelzuleitung 3.5 mit den Sprüharmen 3.5.3 in der gewünschten Drehrichtung 3.5.4 (vgl. Figur 1) und mit der gewünschten Drehgeschwindigkeit in Rotation. Die rotierende Kältemittelzuleitung 3.5 war an ihrem anderen Ende in einer Gleitringdichtung 3.9 gelagert. Ihr offenes Ende ragte in den Druckanschluss 3.9.1 und diente als Kältemitteleinlass 3.5.5. Der Druckanschluss 3.9.1 war über die horizontale stationäre Kältemittelzuleitung 3.11.1, die durch eine abgedichtete Durchführung 3.12 durch die vertikale Innenwand 3.4.2 geführt war, mit dem Kältemittelvorrat 3.11 verbunden. Die Anordnung aus Gleitringdichtung 3.9 und Druckanschluss 3.9.1 wurde von der Halterung 3.9.2 festgehalten.

Die erzeugten Graupel- und/oder Grieselpartikel 3.6.1 wurden über das Auslassrohr 3.7 tangential in den oberen Teil eines Zyklons 3.8 geleitet, worin sie aus der Gasphase abgeschieden wurden. Die abgetrennten Graupel- und/oder Grieselpartikel 3.6.2 fielen über das Auslassrohr 3.8.1 in einen Auffangbehälter 3.15, worin sie mithilfe einer unter dem Boden angeordneten Heizplatte 3.15.2 aufgeschmolzen wurden und wieder einen flüssigen Spritzlack 3.15.1 bildeten. Der Auffangbehälter 3.15 konnte aus der Vorrichtung 1 bzw. aus der Vorrichtung 3 mit einer Ausfahrvorrichtung 3.16 herausgefahren werden und sein Inhalt konnte demselben Verwendungszweck wie der ursprüngliche Spritzlack 2.4.3 zugeführt werden. Dies war ein erheblicher Vorteil gegenüber den Verfahren des Standes der Technik und hatte signifikante Einsparungen an Energie und Kosten zur Folge.

Die Abluft der Vorrichtung 1 wurde über den Polizeifilter oder Nachfilter 3.17 in den Abluftkanal 3.18 geleitet und gegebenenfalls wieder der Zuluft 2.1.1 hinzu gemischt.

### Figur 4

Die Vorrichtung zur Erzeugung des Kältemittels 3.5.1 und seine Einleitung in die um die Längsachse rotierende Kältemittelzuleitung 3.5 umfasste ein Kühlaggregat 3.11.2, das getrocknete Luft auf -20 °C kühlte. Die gekühlte Luft wurde über eine isolierte stationäre Kältemittelzuleitung 3.11.1 in einen isolierten Kältemittelvorrat 3.11 geleitet. Der Kältemittelvorrat 3.11 stand unter einem Überdruck von 5 bar. Von da aus wurde die gekühlte Luft über einen automatisch geregelten Druckminderer 3.11.3 in den Druckanschluss 3.9.1 für das Kältemittel 3.5.1 geleitet, von wo es in den Kältemitteleinlass 3.5.5 der von der Gleitringdichtung 3.9 gehaltenen, in der Drehrichtung 3.5.4 rotierenden Kältemittelzuleitung 3.5 strömte.

### Figur 5

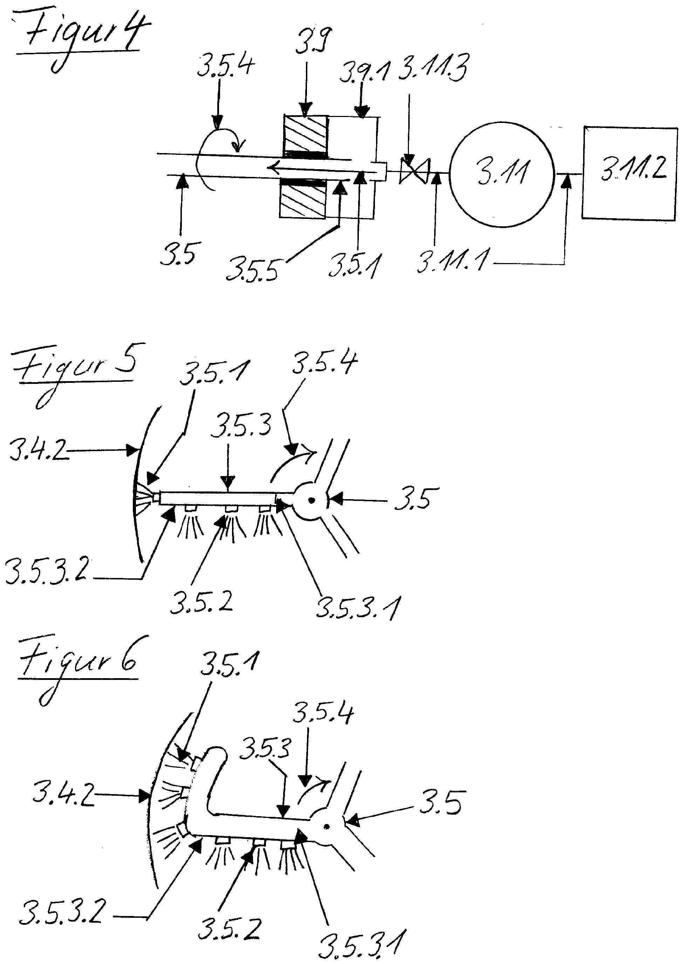

Der gerade Sprüharm 3.5.3 der Ausführungsform gemäß der Figur 5 wies drei Kältemitteldüsen 3.5.2 auf, die das Kältemittel 3.5.1 entgegen der Drehrichtung 3.5.4 versprühten. Eine weitere Kältemitteldüse 3.5.2 war auf die Innenwand 3.4.2 des Verwirbelungsreaktor 3.4 gerichtet. Das Kältemittel 3.5. 1 wurde über den von einer Wand 3.5.3.2 umschlossenen Hohlraum 3.5.3.1 den Kältemitteldüsen 3.5.2 zugeführt. Bei dieser Ausführungsform wurde die Innenwand 3.4.2 gekühlt und zugleich konnten anhaftende Graupel- und/oder Grieselpartikel 3.6 wieder abgelöst werden.

### Figur 6

Der in seinem Endbereich parallel zur Innenwand 3.4.2 und in Drehrichtung 3.5.4 gebogene Sprüharm 3.5.3 der Ausführungsform gemäß der Figur 6 wies sechs Kältemitteldüsen 3.5.2 auf, von denen drei am geraden Abschnitt des Sprüharms 3.5.3 angeordnet waren und das Kältemittel 3.5.1 entgegen der Drehrichtung 3.5.4 versprühten. Die weiteren drei Kältemitteldüsen 3.5.2 waren auf dem gebogenen Abschnitt angeordnet und versprühten das Kältemittel in Richtung der Innenwand 3.4.2. So konnte der bei der Figur 5 beschriebene Effekt verstärkt werden.

### Figur 7

Die Ausführungsform des Sprüharms 3.5.3 gemäß der Figur 7 entsprach im Wesentlichen der Ausführungsform gemäß der Figur 5, nur dass die auf die Innenwand 3.4.2 gerichtete Kältemitteldüse 3.5.2 durch einen streifenförmigen Schaber 3.5.6 aus einem bei -20 °C elastischen Kunststoff ersetzt worden war. Durch den streifenförmigen Schaber 3.5.6, der über die Innenwand 3.4.2 geführt wurde, konnte derselbe Effekt wie bei den Ausführungsformen gemäß den Figuren 5 und 6 erzielt werden.

### Figur 8

Die Ausführungsform des Sprüharms 3.5.3 gemäß der Figur 8 wies einen kreisrunden Querschnitt auf. Das Kältemittel 3.5.1 wurde durch den von der Wand 3.5.3.2 umschlossenen Hohlraum 3.5.3.1 zu der Kältemitteldüse 3.5.2 geleitet und dort durch den Düsenkanal 3.5.2.1 versprüht.

### Figur 9

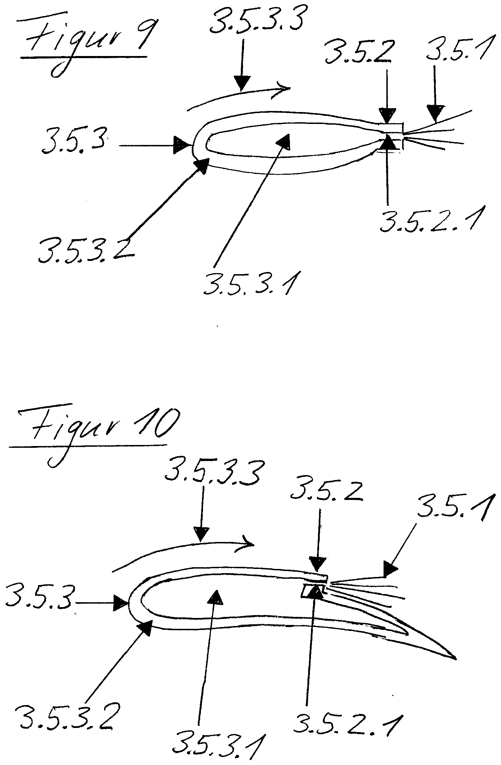

Die Ausführungsform des Sprüharms 3.5.3 gemäß der Figur 9 wies einen in die Länge gezogenen elliptischen Querschnitt auf. Die Kältemitteldüse 3.5.2 war am Ende der Hauptachse der Ellipse angeordnet. Ansonsten waren dieselben konstruktiven Merkmale wie bei der Ausführungsform gemäß der Figur 8 vorhanden.

### Figur 10

Die Ausführungsform des Sprüharms 3.5.3 gemäß der Figur 10 wies im Querschnitt eine Kontur wie ein Flugzeugflügel auf. Die Kältemitteldüse 3.5.2 war auf der Oberseite der Kontur angeordnet. Ansonsten waren dieselben konstruktiven Merkmale wie bei den Ausführungsformen gemäß den Figuren 8 und 9 vorhanden. Die Sprüharme 3.5.3 mit der Flügelform konnten wegen ihres durch den Luftstrom 3.5.3.3 hervorgerufenen Auftriebs mit besonderem Vorteil in den vertikalen Verwirbelungsreaktoren 3.4 (vgl. Figur 3) verwendet werden.

## Patentansprüche

1. Vorrichtung (1) zur Wiedergewinnung von Spritzlack (2.4.3) aus Spritznebeln (3.2) von Spritzlackierkabinen (2), umfassend
(I) mindestens eine Spritzlackierkabine (2) mit
- mindestens einer Luftzuleitung (2.1),
- mindestens einem Verteilerraum (2.2),
- mindestens einer horizontal angeordneten, luftdurchlässigen Filterdecke (2.3),
- mindestens einer Luftströmung (2.5) in den Spritzkabinenraum (2.6), in dem mindestens ein mit einem Spritzlack (2.4.3) zu lackierendes Objekt (2.7) platziert ist,
- mindestens einer Spritzlackiervorrichtung (2.4) mit mindestens einer Sprühdüse (2.4.1) sowie
- mindestens einem horizontalen, für Luft und Spritznebel (3.2) durchlässigen Siebboden (2.9);
(II) mindestens eine Vorrichtung (3) zur Wiedergewinnung von Spritzlack (2.4.3) aus Spritznebeln (3.2) mit
- mindestens einer Spritznebellenkung (3.1), die unterhalb des Siebbodens (2.9) angeordnet ist,
- in der mindestens einen Spritznebellenkung (3.1) nach unten strömende Spritznebel (3.2) und
- mindestens einem horizontalen, für Luft und Spritznebel (3.2) durchlässigen Siebboden (3.3),
- mindestens einem darunter angeordneten Verwirbelungsreaktor (3.4) mit rundem Querschnitt, in den die Spritznebel (3.2) zwecks Erzeugung von Graupel- und/oder Grieselpartikel (3.6) einleitbar sind,
- mit mindestens einer längs oder parallel zur Längsachse von (3.4) angeordneten, in mindestens eine Drehrichtung (3.5.4) um die Längsachse rotierbaren Kältemittelzuleitung (3.5) mit
- mindestens zwei Sprüharmen (3.5.3) mit jeweils mindestens zwei Kältemitteldüsen (3.5.2) zur Zuleitung und Eindüsung mindestens eines Kältemittels (3.5.1),
- verwirbelten Graupel- und/oder Grieselpartikel (3.6) mit insgesamt derselben stofflichen Zusammensetzung wie die Spritznebel (3.2) und
- mindestens einem an der Unterseite des mindestens einen Verwirbelungsreaktors (3.4) angeordneten Auslassrohr (3.7) für mindestens einen abgesaugten Gasstrom (3.7.1) und ausgetragene Graupel- und/oder Grieselpartikel (3.6.1),
- mindestens einer an das mindestens eine Auslassrohr (3.7) angeschlossenen Vorrichtung (3.8) zur Abscheidung der Graupel- und/oder Grieselpartikel (3.6.1) aus dem mindestens einen abgesaugten Gasstrom (3.7.1) und
- mindestens einem Auslassrohr (3.8.1) für die aus dem mindestens einen Gasstrom (3.7.1) abgeschiedenen Graupel- und/oder Grieselpartikel (3.6.2), das mit mindestens einem darunter angeordneten Auffangbehälter (3.15) für die abgeschiedenen Graupel- und/oder Grieselpartikel (3.6.2) und den wiedergewonnenen Spritzlack (3.15.1) verbunden ist, sowie
- mindestens einem Abluftkanal (3.18) mit mindestens einem Polizeifilter (3.17).

2. Vorrichtung (1) nach Anspruch 1, **dadurch gekennzeichnet, dass** es sich bei dem Spritzlack (2.4.3, 3.15.1) um einen wässrigen oder lösemittelhaltigen, physikalisch trocknenden Lack, oxidativ härtenden Lack, Zweikomponentenlack, Einbrennlack oder strahlenhärtbaren Lack handelt.

3. Vorrichtung (1) nach Anspruch 1 oder 2, **dadurch gekennzeichnet, dass** es sich bei dem Spritzlack (2.4.3, 3.15.1) um einen Schiffslack, Bautenlack, Möbellack, Kraftfahrzeuglack, Klarlack, Unidecklack, Basislack, Füller, Steinschlagschutzlack, Unterbodenschutzlack oder Reparaturlack handelt.

4. Vorrichtung (1) nach einem der Ansprüche 1 bis 3, **dadurch gekennzeichnet, dass** der mindestens eine Verwirbelungsreaktor (3.4) horizontal, nach unten geneigt oder vertikal unter der Spritzlackierkabine (2) angeordnet ist.

5. Vorrichtung (1) nach einem der Ansprüche 1 bis 4, **dadurch gekennzeichnet, dass** mindestens drei Sprüharme (3.5.3) an einer Stelle sternförmig mit der rotierbaren Kältemittelzuleitung (3.5) verbunden sind.

6. Vorrichtung (1) nach Anspruch 5, **dadurch gekennzeichnet, dass** mindestens zwei Konfigurationen von jeweils mindestens drei an jeweils einer Stelle auf der Kältemittelzuleitung (3.5) sternförmig angeordneten Sprüharmen (3.5.3) hintereinander angeordnet sind.

7. Vorrichtung (1) nach Anspruch 6, **dadurch gekennzeichnet, dass** die mindestens drei an jeweils einer Stelle auf der Kältemittelzuleitung (3.5) sternförmig angeordneten Sprüharme (3.5.3) der mindestens zwei Konfigurationen auf Lücke stehen oder deckungsgleich angeordnet sind.

8. Vorrichtung (1) nach einem der Ansprüche 1 bis 7, **dadurch gekennzeichnet, dass** die mindestens eine Kältemittelzuleitung (3.5) durch mindestens einen Motor (3.13) rotierbar ist.

9. Vorrichtung (1) nach einem der Ansprüche 1 bis 8, **dadurch gekennzeichnet, dass** das mindestens eine Kältemittel (3.5.1) eine Temperatur von -190 °C bis 0 °C hat und bei Raumtemperatur und unter Atmosphärendruck ein Gas ist.

10. Vorrichtung (1) nach einem der Ansprüche 1 bis 9, **dadurch gekennzeichnet, dass** die mindestens eine Vorrichtung (3.8) zur Abscheidung der Graupel- und/oder Grieselpartikel (3.6.1) aus dem abgesaugten Gasstrom (3.7.1) eine mehrstufige Zentrifuge (3.8) und/oder ein Zyklon oder Fliehkraftabscheider (3.8) ist.

11. Verfahren zur Wiedergewinnung von Spritzlack (2.4.3) aus Spritznebeln (3.2) von Spritzlackierkabinen (2), **dadurch gekennzeichnet, dass** man hierfür eine Vorrichtung (1) gemäß einem der Patentansprüche 1 bis 10 verwendet.

12. Verfahren nach Anspruch 11, **dadurch gekennzeichnet, dass** man hierbei
(a) dem Spritzkabinenraum (2.6) mindestens einer Spritzlackierkabine (2) über mindestens eine Luftzuleitung (2.1), mindestens einen Verteilerraum (2.2) und mindestens eine horizontal angeordnete, luftdurchlässige Filterdecke (2.3) eine laminare Luftströmung (2.5) zuführt;
(b) in den Spritzkabinenraum (2.6) mindestens ein zu lackierendes Objekt (2.7) hängend oder stehend platziert und mithilfe mindestens einer manuell geführten Spritzlackierpistole (2.4) oder mindestens eines computergesteuerten Spritzlackierroboters (2.4), die jeweils mindestens eine Sprühdüse (2.4.2) aufweisen, mit einem Spritzlack (2.4.3) lackiert, so dass das zu lackierende Objekt (2.7) mit appliziertem Spritzlack (2.4.4) bedeckt wird;
(c) die entstehenden, nach unten strömenden Spritznebel (3.2) über mindestens einen horizontalen, für Luft und Spritznebel (3.2) durchlässigen Siebboden (2.9), mindestens eine darunter angeordnete Spritznebellenkung (3.1) und mindestens einen horizontalen, für Luft und Spritznebel (3.2) durchlässigen Siebboden (3.3) mindestens einem darunter angeordneten Verwirbelungsreaktor (3.4) mit rundem Querschnitt zuführt;
(d) in dem Verwirbelungsreaktor (3.4) mindestens eine längs oder parallel zur Längsachse des Verwirbelungsreaktors (3.4) angeordnete Kältemittelzuleitung (3.5) in mindestens einer Drehrichtung (3.5.4) rotieren lässt und dabei durch mindestens zwei an der Kältemittelzuleitung (3.5) angeordnete Sprüharme (3.5.3) mit jeweils mindestens zwei Kältemitteldüsen (3.5.2) mindestens ein Kältemittel (3.5.1) zuleitet und eindüst, so dass sich verwirbelte Graupel- und/oder Grieselpartikel (3.6) mit insgesamt derselben stofflichen Zusammensetzung wie die Spritznebel (3.2) bilden;
(e) die Graupel- und/oder Grieselpartikel (3.6, 3.6.1) durch mindestens ein an der Unterseite des mindestens einen Verwirbelungsreaktors (3.4) angeordnetes Auslassrohr (3.7) zusammen mit mindestens einem Gasstrom (3.7.1) absaugt und austrägt;
(f) die ausgetragenen Graupel- und/oder Grieselpartikel (3.6.1) in mindestens einer an das mindestens eine Auslassrohr (3.7) angeschlossenen Vorrichtung (3.8) aus dem mindestens einen abgesaugten Gasstrom (3.7.1) abscheidet;
(g) die aus dem mindestens einen Gasstrom (3.7.1) abgeschiedenen Graupel- und/oder Grieselpartikel (3.6.2) durch mindestens ein Auslassrohr (3.8.1) in mindestens einen darunter angeordneten Auffangbehälter (3.15) leitet;
(h) die abgeschiedenen Graupel- und/oder Grieselpartikel (3.6.2) in dem Auffangbehälter (3.15) aufschmilzt und so den Spritzlack (3.15.1) wiedergewinnt und
(i) den Gasstrom (3.7.1) durch mindestens ein Polizeifilter (3.17) und mindestens einen Abluftkanal (3.18) absaugt.

13. Verfahren nach Anspruch 11 oder 12, **dadurch gekennzeichnet, dass** der wiedergewonnene Spritzlack (3.15.1) wieder als Spritzlack (2.4.3) verwendet wird.

## Claims

1. Device (1) for recovering spray paint (2.4.3) from spray mists (3.2) of spray painting booths (2), comprising
(I) at least one spray painting booth (2) with
- at least one air supply line (2.1),
- at least one distribution area (2.2),
- at least one horizontally arranged, air-permeable filter cover (2.3),
- at least one airflow (2.5) into the spray booth space (2.6), in which at least one object (2.7) to be painted with the spray paint (2.4.3) is placed,
- at least one spray painting device (2.4) with at least one spray nozzle (2.4.1) and
- at least one horizontal sieve bottom (2.9) permeable to air and spray mist (3.2);
(II) at least one device (3) for the recovery of spray paint (2.4.3) from spray mist (3.2) with
- at least one spray mist steering (3.1), which is arranged below the sieve bottom (2.9),
- in the at least one spray mist steering (3.1) downwardly flowing spray mist (3.2), and
- at least one horizontal sieve plate (3.3) permeable to air and spray mist (3.2),
- at least one swirl reactor (3.4) with a round cross-section, arranged below, into which the spray mist (3.2) can be introduced for the purpose of generating sleet and / or gravel particles (3.6), with
- at least one refrigerant supply line (3.5), which is arranged along the parallel to the longitudinal axis of (3.4) and rotatable about the longitudinal axis in at least one direction of rotation (3.5.4) with at least two spray arms (3.5.3), each with at least two refrigerant nozzles (3.5.2) for supplying and injecting at least one refrigerant (3.5.1),
- swirled sleet and /or grit particles (3.6) with overall the same material composition as the spray mist (3.2) and
- at least one outlet pipe (3.7) arranged on the underside of the at least one swirl reactor (3.4) for at least one sucked out gas stream (3.7.1) and discharged sleet and / or grit particles (3.6.1),
- at least one device (3.8) connected to the at least one outlet pipe (3.7) for separating the sleet and / or grit particles (3.6.1) from the at least one gas stream (3.7.1) and
- at least one outlet pipe (3.8.1) for the sleet and / grit particles (3.6.2) separated from the at least one gas stream (3.7.1), which is connected with at least one collecting container (3.15) arranged below it for the sleet and / or grit particles separated (3.6.2) and the recovered spray paint (3.15.1), and
- at least one exhaust air duct (3.18 with at least one police filter (3.17).

2. The device (1) according to claim one, **characterized in that** the spray paint (2.4.3, 3.15.1) is an aqueous or solvent-based paint, a physically drying paint, an oxidative-curing paint, a two-component paint, a stoving paint or a radiation-curable paint.

3. The device (1) according to claim 1 or 2, **characterized in that** the spray paint (2.4.3, 3.15.1) is a marine paint, a building paint, a furniture, paint, a motor vehicle paint, that clear paint, a plane top paint, a basecoat, a stone chip protection and underbody protection paint or a repair paint.

4. The device (1) according to one of the claims 1 to 3, **characterized in that** the at least one swirl reactor (3.4) is arranged horizontally, inclined downwards or vertically under the spray painting booth (2).

5. The device (1) according to one of the claims 1 to 4, **characterized in that** at least three spray arms (3.5.3) are connected in a star shape at one point to the refrigerant supply line (3.5).

6. The device (1) according to claim 5, **characterized in that** at least two configurations of at least three spray arms (3.5.3) arranged in a star shape at one point each on the refrigerant supply line (3.5) are arranged one behind the other.

7. The device (1) according to one of the claims 1 to 6, **characterized in that** the at least three spray arms (3.5.3) of the at least two configurations, each arranged in a star shape at one point on the refrigerant supply line (3.5), are staggered or congruent.

8. The device (1) according to one of the claims 1 to 7, **characterized in that** the at least one refrigerant supply line (3.5) can be rotated by at least one motor (3.13).

9. The device (1) according to one of the claims 1 to 8, **characterized in that** the at least one refrigerant (3.5.1) has a temperature of -190°C to 0°C and is a gas at room temperature and under atmospheric pressure.

10. The device (1) according to one of the claims 1 to 9, **characterized in that** the at least one device (3.8) for separating the sleet and/ or gravel particles (3.6.1) from the extracted gas stream (3.7.1) is a multi-stage centrifuge (3.8) and / or a cyclone or centrifugal separator (3.8).

11. A method for recovering spray paint (2.4.3) from spray mists (3.2) from spray painting booths (2), **characterized in that** a device (1) according to one of the claims 1 to 10 is used for this.

12. The method according to claim 11, **characterized in that** here
(a) a laminar airflow (2.5) is applied to the spray booth space (2.6) of at least one spray painting booth (2) via at least one air supply line (2.1), at least one distribution area (2.2) and at least one horizontally arranged, air-permeable filter ceiling (2.3);
(b) at least one object (2.7) to be painted is placed in the spray booth area (2.6) hanging or standing and is painted with the spray paint (2.4.3) with the aid of at least one manually operated spray gun (2.4) or at least one computer-controlled spray painting robot (2.4), each of which has at least one spray nozzle (2.4.2), so that the object to be painted (2.7) is covered with applied spray paint (2.4.4);
(c) the resulting, downward-flowing spray mist (3.2) is fed over at least one horizontal, for air and spray mist (3.2) permeable sieve (2.9), at least one spray mist steering (3.1) arranged below and at least one horizontal, for air and spray mist (3.2) permeable sieve bottom (3.3) to at least one swirl reactor (3.4) with a round cross-section arranged underneath;
(d) at least one refrigerant supply line (3.5) arranged along or parallel to the longitudinal axis of the swirl reactor (3.4) rotates in the swirl reactor (3.4) in at least one direction of rotation (3.5.4) and thereby by at least two spray arms arranged on the refrigerant supply line (3.5) (3.5.3) with at least two refrigerant nozzles (3.5.2) feed and inject at least one refrigerant (3.5.1) so that swirled sleet and / or gravel particles (3.6) with a total of the same material composition as the spray mists (3.2) are formed;
(e) the sleet and / or grit particles (3.6, 3.6.1) are sucked off and discharged through at least one outlet pipe (3.7) arranged on the underside of the at least one swirl reactor (3.4) together with at least one gas stream (3.7.1);
(f) the discharged sleet and / or grit particles (3.6.1) are separated from the at least one sucked-off gas stream (3.7.1) in at least one device (3.8) connected to the at least one outlet pipe (3.7);
(g) the sleet and / or grit particles (3.6.2) separated from the at least one gas stream (3.7.1) are guided through at least one outlet pipe (3.8.1) into at least one collecting container (3.15) arranged below;
(h) the separated sleet and / or grit particles (3.6.2) melt in the collecting container (3.15), and thus recover the spray paint (3.15.1); and
(i) the gas flow (3.7.1) is sucked through at least one police filter (3.17) and at least one exhaust air duct (3.18).

13. The method according to claim 11 or 12, **characterized in that** the recovered spray paint (3.15.1) is used again as spray paint (2.4.3).

## Revendications

1. Dispositif (1) pour récupérer la peinture en aérosol (2.4.3) de brouillards de pulvérisation (3.2) des cabines de peintures au pistolet (2), comprenant
(I) au moins une cabine de peinture par pulvérisation (2) avec
- au moins une conduit d'alimentation en air (2.1),
- au moins une sale de distribution (2.2),
- au moins un couvercle de filter permeable à l'air (2.3) disposé horizontalement,
- au moins un flux d'air (2.5) dans l'espace de la cabine de pulvérisation (2.6), dans lequel au moins un objet (2.7) à peindre avec une peinture en aerosol (2.4.3) est placé,
- au moins un dispositif de peinture par pulvérisation (2.4) avec au moins une buse de pulvérisation (2.4.1) et
- au moins un fond de tamis horizontal (2.9) perméable à l'air et au brouillard de pulvérisation (3.2);
(II) au moins un dispositif (3) de récupération de la peinture en aérosol (2.4.3) du brouillard de pulvérisation (3.1)
- avec au moins une direction de brouillard de pulvérisation (3.1) qui est disposée sous le fond de tamis (2.9),
- dans l'au moins un direction de brouillard de pulvérisation (3.1) le brouillard de pulvérisation (3.2) s'écoulant vers le bas et
- au moins un tamis horizontal (3.3) perméable à l'air et au brouillard de pulvérisation (3.2), au moins un réacteur à turbulence (3.4) de section ronde, dispose en dessous, dans lequel le brouillard de pulvérisation (3.) put être introduit pour le but de grésil de generation et / ou les particules de gravier (3.6),
- avec au moins un conduit d'alimentation du refrigerant (3.5) qui est agencé le long ou parallèlement à l'axe longitudinal (3.4) et pouvant tourner autour de l'axe longitudinal dans moins un direction de rotation (3.4.5) avec au moins deux bras de pulvérisation (3.5.3), chacune avec au moins deux buses réfrigérant (3.5.2) pour fournir et injecter au moins un fluide frigorigène (3.5.1),
- avec des particules de grésil et / ou de sable tourbillonantes (3.6) ayant globalement la même compositionde matériau que le brouillard de pulvérisation (3.2) et
- au moins un tuyau de sortie (3.) disposé sur la face inférieure d'au mains un réacteur à turbulance (3.4) pour au moins un aspiré courant de gaz (3.7.1) et le grésil et / ou des grains déchargée (3.6.1),
- aux moins un dispositive (3.8) relié á l'au moins une conduit de sortie (3.7) pour séparer les patricules de grésil et / ou des grains (3.6.1) à partir d'au moins un courant de gaz aspiré (3.7.1) et
- au moins un tuyau de sortie (3.8.1) pour le grésil et / ou de grains séparé (3.6.2) d'au moins un courant de gaz (3.7.1), qui est pourvu d'au moins un récipient collecteur (3.15) pour le grésil et / ou les grains séparé (3.6.2) et la peinture par pulvérisation (3.15.1) récupérés et
- au moins un conduit d'écavuation d'air (3.18) avec au moins un filtre de police.

2. Dispositif (1) selon la revendication 1, characterize en ce que la peinture en aerosol (2.4.3, 3.15.1) est une peinture aqueuse ou à base de solvent, une peinture séchant physiquement, une peinture á séchage par oxidation, une peinture á deux composants et une peinture durcissable au four ou rayonnement.

3. Dispositif (1) selon la revendication 1 ou 2, **caractérisé en ce que** la peinture en aerosol (2.4.3, 3.15.1) est une peinture marine, une peinture de construction, une peinture pur meubles, und peinture pour véhicule automobile, une peinture transparente, une peinture de finition unie, une couche de fond, une couche d'extendeur ou remplissage, une peinture de protection contre les jets de pierres, une peinture de protection de dessous de caisse ou une peinture de réparation.

4. Dispositif (1) selon l'une des revendications 1 à 3, **caractérisé en ce que** le au moins un réacteur à turbulence (3.4) est dispose horizontalement, incliné vers le bas ou verticalement sous la cabine de peintures au pistolet (2).

5. Dispositif (1) selon l'une des revendications 1 à 4, **caractérisé en ce qu'**au moins trois bras gicleurs (3.5.3) sont reliés en un point en form d'étoile à la conduite d'alimentation en fluide frigorigène rotative (3.5).

6. Dispositif (1) selon la revendication 5, **caractérisé en ce qu'**au moins deux configurations d'au moins trois bras gicleurs (3.5.3) disposés en étoile en un point chacun sur la conduit d'alimentation en fluide frigorigène (3.5) sont disposes l'une derrière l'autre.

7. Dispositif (1) selon l'une des revendications 1 à 6, **caractérisé en ce que** les au moins trois bras gicleurs (3.5.3) des au moins deux configurations, chacun dispose en étoile en un point de la conduit d'alimentation en fluide frigorigène (3.5), sont décalés ou congruents.

8. Dispositif (1) selon l'une des revendications 1 à 7, **caractérisé en ce que** la au moins une conduit d'alimentation en fluide frigorigène (3.5) peut être mis en en rotation par au moins une moteur (3.13).

9. Dispositif (1) selon l'une des revendications 1 à 8, **caractérisé en ce que** le au moins un refrigerant (3.5.1) a une temperature de - 190 °C à 0 °C et est un gaz à température ambiante et sous pression atmosphérique.

10. Dispositif (1) selon l'une des revendications 1 à 9, **caractérisé en ce que** le au moins un dispositif (3.8) pour séparer les particules de grésil et / ou de gravier (3.6.1) du flux de gaz extrait (3.7.1) est un centrifuge à plusieurs étages (3.8) et / ou un cyclone ou un séparateur centrifuge (3.8).

11. Prócédé de recuperation de peinture en aérosol (2.4.3) à partir de brouillards (3.2) à partir d'une cabine de peinture au pistolet (2), **caractérisé en ce qu'**un dispositif (1) selon l'une des revendications 1 à 10 est utilize à cet effet.

12. Procédé selon la revendication 11, **caractérisé en ce qu'**ici
(a) un flux d'air laminaire (2.5) est fourni à l'espace de cabine de pulvérisation (2.6) d'au moins une cabine par pulvérisation (2) via au moins une conduit d'alimentation en air (2.1), au moins une zone de distribution (2.2) et au moins un plafond filtrant permeable à l'air (2.3) dispose horizontalement;
(b) au moins un objet (2.7) à peindre est place dans la zone de la cabine de peinture (2.6) souspendu ou debout et à l'aide d'au moins un pistolet de pulvérisation à commande manuelle (2.4) ou d'au moins une peinture au pistolet commandée par ordinateur robot (2.4), sont peintes avec une peinture de pulvérisation (2.4.3), de sorte que l'objet à peindre (2.7) est recouverte d'une peinture appliquée par pulvérisation (2.4.3) dont chacun comporte au moins une buse de pulvérisation (2.4.4);
(c) le bouillard de pulvérisation (3.2) descendent resultant sur au moins un plateau de tamis (2.9) permeable á l'air et au brouillard de pulvérisation (3.2) horizontal, au moins une direction de brouillard de pulvérisation (3.1) dispose en dessous et au moins un horizontal, pour l'air et le brouillard de pulvérisation (3.2) du fond tamis permeable (3.3) est introduit dans au moins réacteur à turbulence (3.4) avec une section rondée dispose en dessous;
(d) dans la réacteur à turbulence (3.4), au moins une conduit d'alimentationen refrigerant (3.5) dispose le long ou parallèlement à l'axe longitudinal du réacteur à turbulence (3.4) tourne dans au moins un sens de rotation (3.5.4) et ainsi par au moins deux bras de pulvérisation (3.5.3) disposes sur la conduit d'alimentationde en fluide frigorigène (3.5.1) avec au moins deux buses réfrigérant (3.5.2) chacun des flux et injecte au moins un fluide frigorigène (3.5.1) de telle sorte que les particules de grésil et / ou de sable tourbillonantes (3.6) avec un total de la composition même matériau que la forme du brouillard de pulvérisation (3.2);
(e) les particules de grésil et / ou de sable (3.6, 3.6.1) sont aspirées et évacuées par au moins un tuyau de sortie (3.7) dispose sur la face inférieure du au moins un réacteur à turbulence (3.4) avec au moins un courant gazeux (3.7.1);
(f) les particules de grésil et / ou de sable évacuées (3.6.1) sont séparées du au moins un courant de gaz aspiré (3.7.1) dans en moins un dispositive (3.8) connecté au au moins un tuyau de sortie (3.7);
(g) guide les particules de grésil et / ou de sable (3.6.2) séparées du au moins un courant de gaz (3.7.1) à travers au moins un tuyau de sortie (3.8.1) dans un moins un récipient collecteur (3.15) agencé en dessous;
(h) les particules de grésil et / ou de sable (3.6.2) séparées fond dans le récipient collecteur (3.15) et ainsi regagne la peinture en aérosol (3.15.1) et
(i) aspire le flux de gaz (3.7.1) à travers au moins filtre de police (3.17) et au moins conduit d'évacuation d'air (3.18).

13. Procédé selon la revendication 11 ou 12, **caractérisé en ce que** la peinture en aerosol recupérée (3.15.1) est à nouveau utilisée comme peinture en aerosol (2.4.3).
